# EUROPEAN PATENT SPECIFICATION

(11) **EP 1 829 757 B1**
(45) Date of publication and mention of the grant of the patent: **25.06.2008**
(21) Application number: 06251136.5
(22) Date of filing: 02.03.2006
(51) Int. Cl.: B60R 25/02

(54) **Combination ignition switch and steering lock assembly for a motorcycle**
Zündschalter und Lenkschloss für ein Motorrad
Contacteur d'allumage et dispositif de verrouillage de direction pour motocyclette

(43) Date of publication of application: 05.09.2007
(73) Proprietor: Kwang Yang Motor Co., Ltd., Kaohsiung (TW)
(72) Inventor: Chien, Yung-Sheng, Kaohsiung, Hsien (TW); Jseng, Yu-Chi, Kushan District, Kaohsiung (TW); Lin, Chien-Chen, Tsoying District, Kaohsiung (TW)
(74) Representative: Jenkins, Peter David

(56) References cited:
- FR-A- 2 780 012
- US-B1- 6 508 088

## Description

This invention relates to an ignition switch for a motorcycle, and more particularly to a combination ignition switch and steering lock assembly, which can be operated without use of a key.

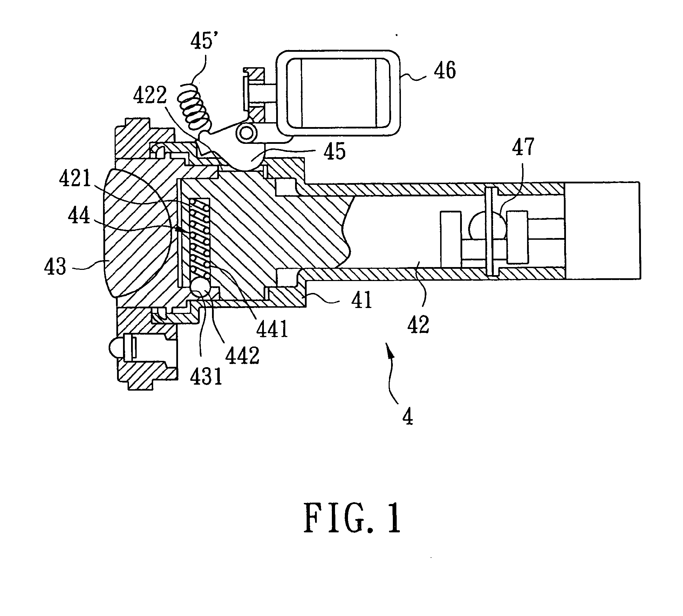

Referring to Fig. 1, a conventional combination ignition switch and steering lock assembly 4 for a motorcycle includes a housing 41, a rotating shaft 42 journalled within the housing 41, a push button 43 co-rotatable with the rotating shaft 42, a limiting unit 44 disposed on the rotating shaft 42, a spring-loaded braking member 45 biased by a spring 45' to press against the rotating shaft 42, a solenoid valve 46 capable of being activated by a remote controller (not shown) to remove the braking member 45 from the rotating shaft 42, and a steering locking bolt 47 driven by the rotating shaft 42 to move between a locking position and a release position.

The rotating shaft 42 is formed with a radial blind hole 421 and an axial slot 422 that is formed in an outer surface thereof. The push button 43 is rotatable among ON, OFF, and LOCK positions, and has an inner surface that is formed with an engaging hole 431 aligned with the blind hole 421 in the rotating shaft 42. The limiting unit 44 includes a coiled compression spring 441 disposed within the blind hole 421 in the rotating shaft 42, and a ball 442 also disposed within the blind hole 421 and biased by the spring 441 to engage the engaging hole 431 in the push button 43 so as to allow for synchronous rotation of the push button 43 and the rotating shaft 42.

When steering of the motorcycle is locked, and when the solenoid valve 46 is not activated, the braking member 45 engages the slot 422 in the rotating shaft 42. This prevents rotation of the rotating shaft 42 in the housing 41. In this state, rotation of the push button 43 only results in removal of the ball 442 from the engaging hole 431 in the push button 43, and therefore cannot be transferred to the rotating shaft 42. As such, it is impossible to move the steering lock bolt 47 from the locking position to the release position by rotation of the push button 43.

When the remote controller is operated to activate the solenoid valve 46, the braking member 45 is operated by the solenoid valve 46 so as to separate from the slot 422 in the rotating shaft 42. At this time, due to the engagement between the ball 442 and the engaging hole 431 in the push button 43, rotation of the push button 43 cannot be transferred to the rotating shaft 42 in the housing 41. Hence, the rotating shaft 42 is unable to drive the locking bolt 47 from the locking position to the release position by operation of the push button 43. A drawback of such a configuration is that, because the spring 45' may experience fatigue overtime, the locking bolt 47 may come to lose its ability to be disposed in the locking position when the push button 43 is disposed in the LOCK position.

Document US-A-6508088 shows a lock according to the preamble of claim 1.

Therefore, the object of this invention is to provide a double lock type combination ignition switch and steering lock assembly for a motorcycle, which includes an auxiliary locking unit operable to lock a locking bolt in a locking position.

According to this invention, a combination ignition switch and steering lock assembly for a motorcycle includes a driving rod, and an auxiliary locking unit including an auxiliary rotary member, a stop rod, and a solenoid valve. The driving rod is movable to convert a locking bolt between a locking position whereat steering of the motorcycle is prevented, and a release position whereat steering of the motorcycle is allowed. The auxiliary rotary member is biased toward a connection position whereat movement of the driving rod is allowed, and is operable to rotate to a disconnection position whereat movement of the driving rod is prevented. The stop rod is biased to an interference position whereat rotation of the auxiliary rotary member is prevented. The solenoid valve is remotely controllable to move the stop rod to a non-interference position whereat rotation of the auxiliary rotary member is allowed.

As such, when the locking bolt is moved to the locking position, the auxiliary rotary member can be rotated to the disconnection position so as to prevent rotation of the driving rod and, thus, movement of the locking bolt.

These and other features and advantages of this invention will become apparent in the following detailed description of a preferred embodiment of this invention, with reference to the accompanying drawings, in which:
Fig. 1 is a sectional view of a conventional combination ignition switch and steering lock assembly for a motorcycle;
Fig. 2 is an exploded perspective view of the preferred embodiment of a double lock type combination ignition switch and steering lock assembly according to this invention;
Fig. 3 is a sectional view of the preferred embodiment when a main rotary member is disposed in an ON position and when an auxiliary rotary member is disposed in a connection position;
Fig. 4 is a sectional view taken along Line IV-IV in Fig. 3;
Fig. 5 is a sectional view of the preferred embodiment when the main rotary member is disposed in an OFF position and when the auxiliary rotary member is disposed in a return position;
Fig. 5A is a sectional view of the preferred embodiment when the main rotary member is disposed in the OFF position and when the auxiliary rotary member is disposed in a disconnection position;
Fig. 6 is a sectional view of the preferred embodiment when the main rotary member is disposed in a LOCK position and when the auxiliary rotary member is disposed in the disconnection position; and
Fig. 7 is a sectional view taken along Line VII-VII in Fig. 5.

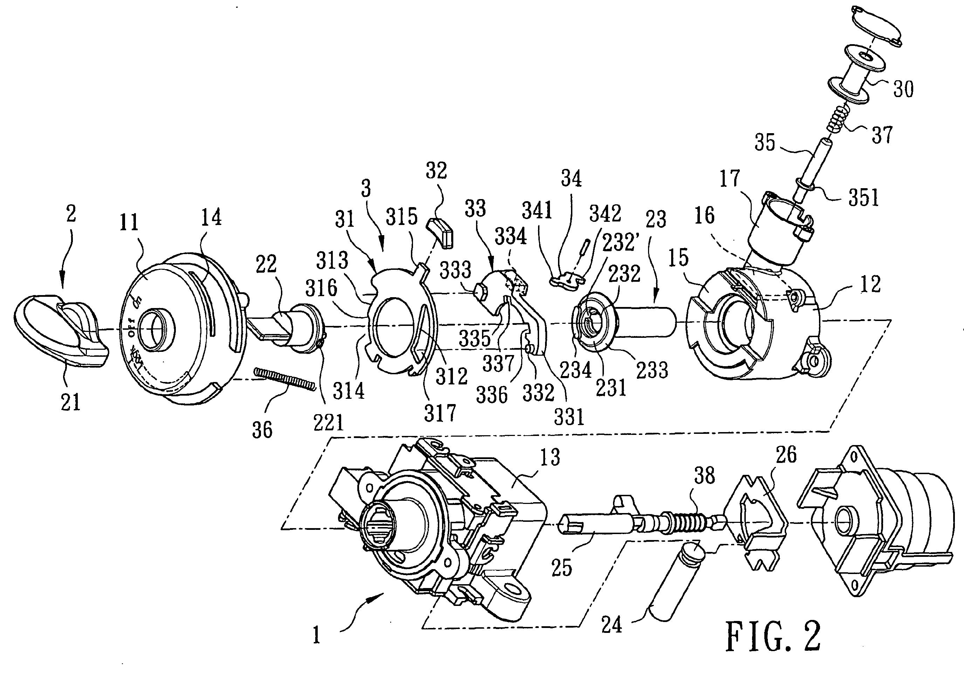

Referring to Figs. 2, 3, and 4, the preferred embodiment of a double lock type combination ignition switch and steering lock assembly for a motorcycle according to this invention includes a lock seat 1, a main locking unit 2, and an auxiliary locking unit 3.

The lock seat 1 includes a front cap 11, an axial tube 12 having a front end connected coaxially and fixedly to a rear end of the front cap 11, a rear seat member 13 connected fixedly to a rear end of the axial tube 12, and an inclined tube 17.

The main locking unit 2 includes a main rotary member 21, a rotating rod 22, a driving rod 23, a locking bolt 24, a crankshaft 25, and a sliding member 26.

The auxiliary locking unit 3 includes an auxiliary rotary member 31, a push button 32, a spacer member 33, a crank member 34, a stop rod 35, first, second, and third resilient members 36, 37, 38, and a solenoid valve 30. Each of the first, second, and third resilient members 36, 37, 38 is configured as a coiled compression spring.

The front cap 11 is generally cylindrical, and has a front end surface that is indicated with three function marks "ON," "OFF," and "LOCK," and an annular wall formed with a slide slot 14 that extends along a circumferential direction of the front cap 11 and that has two closed ends. The main rotary member 21 is configured as a rotary button, and is disposed rotatably on the front cap 11. The auxiliary rotary member 31 is configured as an annular plate sleeved rotatably on the rotating rod 22, and has an outer periphery formed with a projecting plate portion 315 that extends radially and outwardly therefrom and through the slide slot 14 in the front cap 11. The push button 32 is sleeved on a radial outer end of the projecting plate portion 315 of the auxiliary rotary member 31 and that is disposed outwardly of the front cap 11.

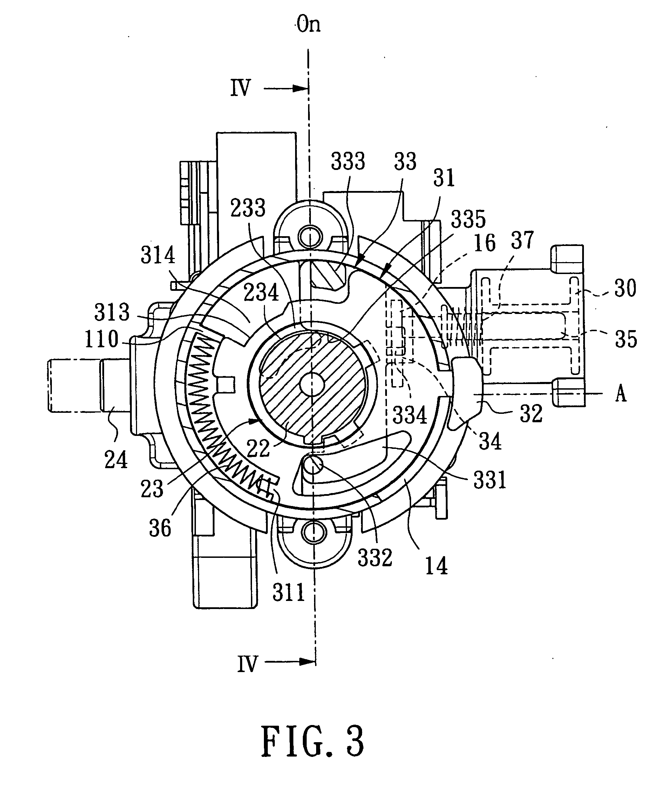

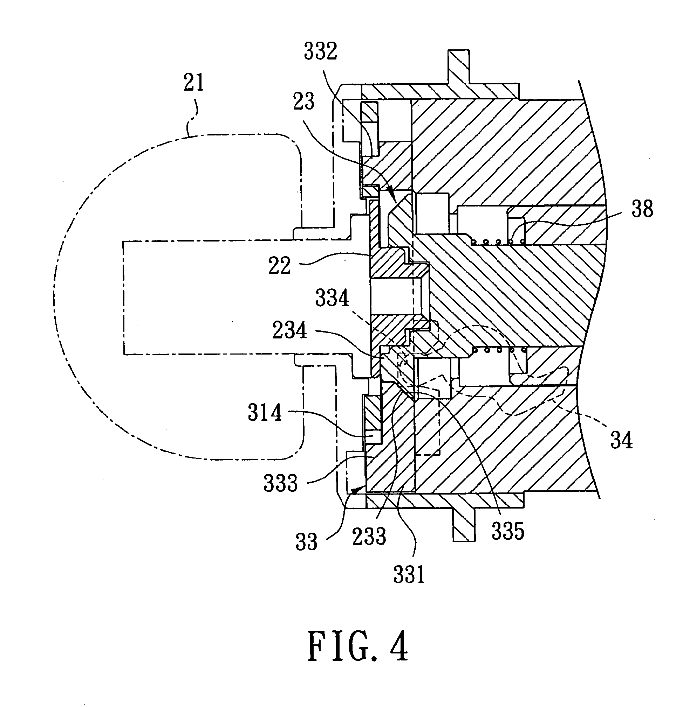

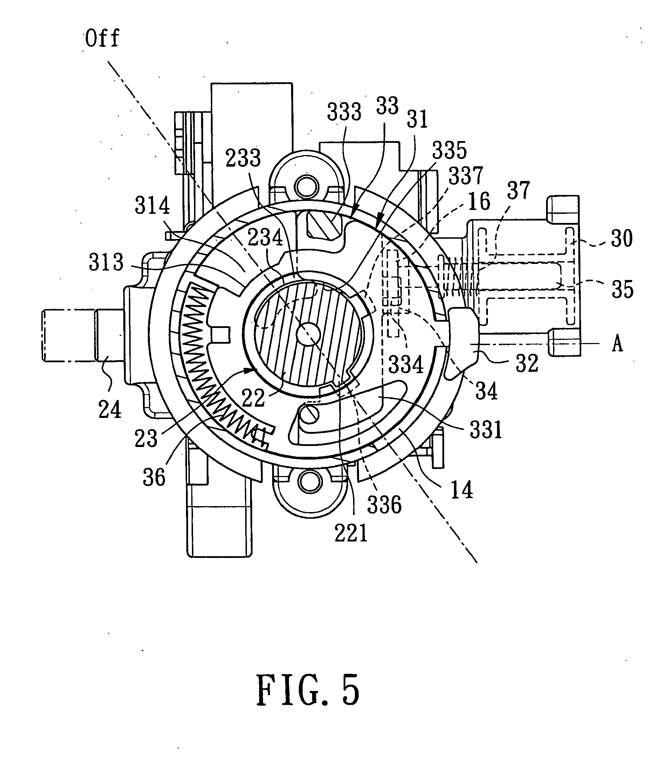

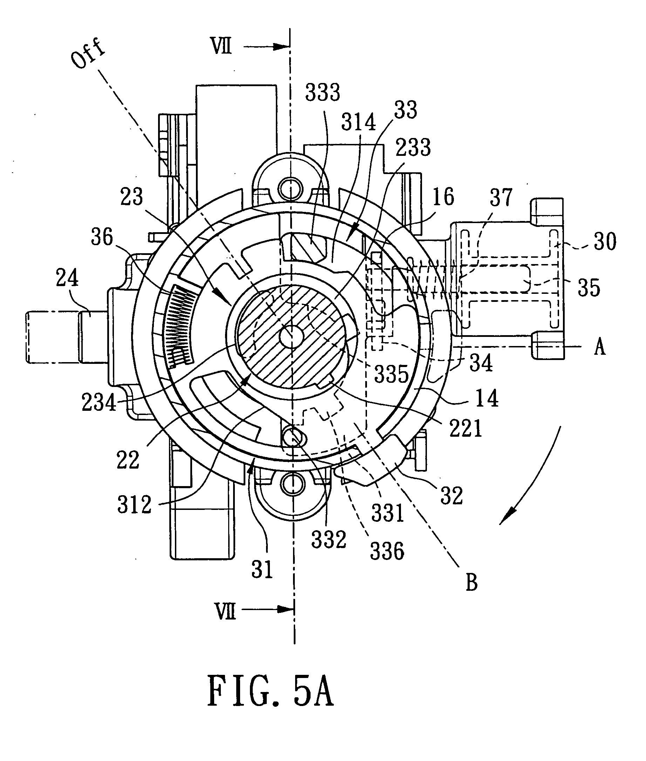

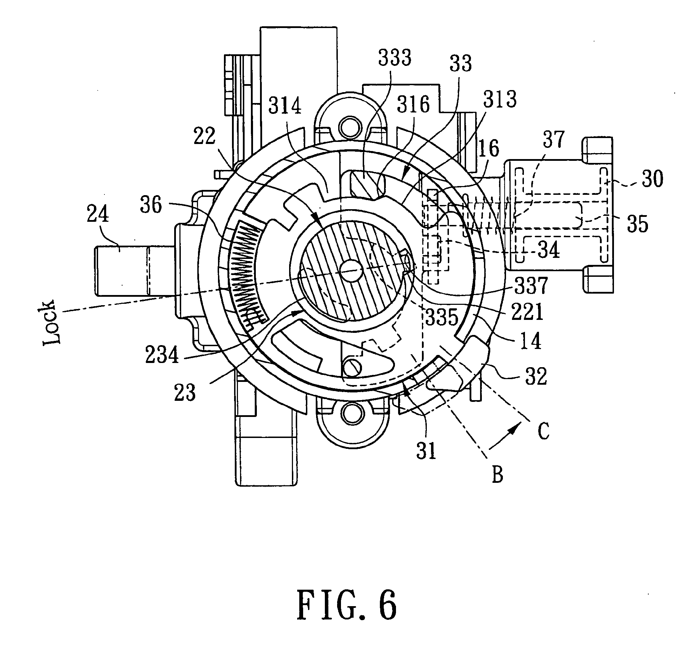

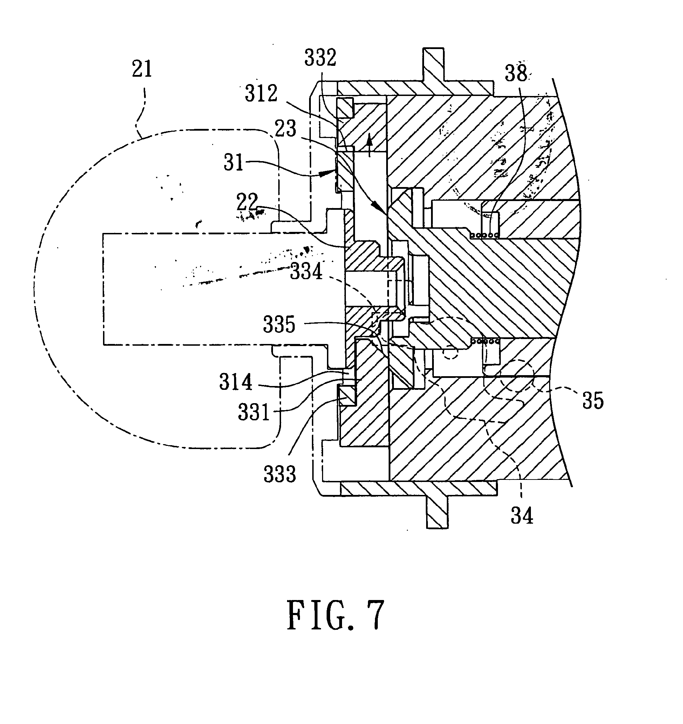

A front end surface of the axial tube 12 is formed with a guide slot unit 15 that has two open ends. The driving rod 23 is movable within the axial tube 12 between front and rear positions in a known manner. When the driving rod 23 is disposed in the front position, the locking bolt 24 is disposed in a release position or a retracted position shown in Figs. 3, 5, and 5A. This allows for steering of the motorcycle. When the driving rod 23 is moved to the rear position, the sliding member 26 is moved horizontally and rearwardly by the crankshaft 25 so as to move the locking bolt 24 to a locking position or an extended position shown in Fig. 6, thereby locking steering of the motorcycle. The structures and operations of the crankshaft 25, and the sliding member 16 are well known in the art, and therefore will not be described herein. The spacer member 33 is disposed movably within the guide slot unit 15 in the axial tube 12, and is movable along a predetermined direction between a non-separating position shown in Fig. 4 and a separating position shown in Fig. 7.

An inner surface of the driving rod 23 is formed with a C-shaped projection 232 having two ends defining a gap 232' therebetween. The rotating rod 22 extends through the front cap 11, and has a front end inserted into and connected fixedly to the main rotary member 21, and an annular outer surface formed with a projecting block 221 that extends radially and outwardly therefrom and that engages the gap 232' in the driving rod 23 so as to allow for synchronous rotation of the rotating rod 22 and the driving rod 23. As such, the main rotary member 21 is operable to rotate on the front cap 11 so as to move the driving rod 23 between the front and rear positions.

The auxiliary rotary member 31 further has a specifically outlined opening 317 and a specifically outlined notch 314 that is formed in the outer periphery of the auxiliary rotary member 31, an opening wall 312 defining the opening 317, and a notch wall 313 defining the notch 314 and formed with a shoulder 316. The spacer member 33 includes a generally U-shaped spacer body 331, an opening-engaging projection 332, and a notch-engaging projection 333. The spacer body 331 is disposed around the rotating rod 22 and the driving rod 23, and is movable to push the driving rod 23 rearwardly away from the rotating rod 22 so as to be positioned in a space between the rotating rod 22 and the driving rod 23. The opening-engaging projection 332 extends forwardly from one end of the spacer body 331, and is movable within the opening 317 in the auxiliary rotary member 31. The notch-engaging projection 333 extends forwardly from the other end of the spacer body 331, and is movable within the notch 314 in the auxiliary rotary member 31.

The first resilient member 36 has a first end sleeved on a stub 311 (see Fig. 3) of the auxiliary rotary member 31, and a second end abutting against a portion 110 (see Fig. 3) of the front cap 11. When the push button 32 is disposed in a first position (A), the notch-engaging projection 333 of the spacer member 33 is disposed in one end of the notch 314 in the auxiliary rotary member 31, the opening-engaging projection 332 of the spacer member 33 is disposed in one end of the opening 317 in the auxiliary rotary member 31, and the auxiliary rotary member 31 is biased by the first resilient member 36 to a connection position shown in Fig. 3. When the push button 32 is rotated from the first position (A) to a second position (B) shown in Fig. 5A, the notch-engaging projection 333 of the spacer member 33 is disposed in the other end of the notch 314 in the auxiliary rotary member 31, the opening-engaging projection 332 of the spacer member 33 is disposed in the other end of the opening 317 in the auxiliary rotary member 31, and the auxiliary rotary member 31 is disposed in a return position. Subsequently, when the push button 32 is released, the auxiliary rotary member 31 is biased by the first resilient member 36 to rotate counterclockwise to a disconnection position shown in Fig. 6, the push button 32 rotates to a third position (C), and the notch-engaging projection 333 of the spacer member 33 comes into contact with the shoulder 316 of the notch wall 313 of the auxiliary rotary member 31.

The spacer member 33 has an inner surface that is formed with first and second positioning grooves 336, 337, an inclined surface 335 (see Fig. 4), and a rear surface that is formed with a crank-engaging recess 334 for insertion of a front swing arm 341 of the crank arm 34 thereinto.

The driving rod 23 has a front end 231 movable into contact with a rear end of the rotating rod 22 and formed with a forwardly and inwardly inclined annular surface 233 and a stop block 234 that is disposed fixedly on the inclined annular surface 233. The inclined surface 335 of the spacer member 33 is movable into contact with the inclined annular surface 233 or the stop block 234 of the driving rod 23.

The axial tube 12 has an inner surface that is formed with a confining groove 16, within which the crank member 34 is disposed pivotally. The inclined tube 17 has an end connected fixedly to the axial tube 12. The stop rod 35, the second resilient member 37, and the solenoid valve 30 are disposed within the inclined tube 17. The stop rod 35 is movable between a non-interference position shown in Figs. 3, 5, 5A and an interference position shown in Fig. 6. The second resilient member 37 is sleeved on the stop rod 35, and is disposed between an outward flange 351 of the stop rod 35 and the solenoid valve 30 so as to bias the stop rod 35 toward the interference position. The solenoid valve 30 is remotely controllable to attract the stop rod 35 more deeply thereinto, and thereby place the stop rod 35 in the non-interference position.

As such, movement of the spacer member 33 results in rotation of a rear crank arm 342 of the crank member 34 along a curved path between a first arm position shown in Fig. 4 and a second arm position shown in Fig. 7. When the rear crank arm 342 of the crank member 34 is disposed in the first arm position, the spacer member 33 is disposed in the non-separating position, and an inner end of the stop rod 35 is disposed out of the curved path of the rear crank arm 342 of the crank member 34. This allows for movement of the spacer member 33 from the non-separating position to the separating position and, thus, rotation of the auxiliary rotary member 31 from the connection position to the disconnection position. When the rear crank arm 342 of the crank member 34 is disposed in the second arm position, the spacer member 33 is disposed in the separating position, and the inner end of the stop rod 35 is disposed in the curved path of the rear crank arm 342 of the crank member 34. This prevents movement of the spacer member 33 from the separating position to the non-separating position and, thus, rotation of the auxiliary rotary member 31 from the disconnection position to the connection position.

As shown in Figs. 3 and 4, when it is desired to drive the motorcycle, the main rotary member 21 is rotated to the ON position, and the push button 32 is rotated to the first position. In this state, the driving rod 23 is biased by the third resilient member 38 to abut against the rotating rod 22, the locking bolt 23 is disposed in the release position, the spacer member 33 is disposed in the non-separating position such that the inclined surface 335 of the spacer member 33 is in contact with the stop block 234 of the driving rod 23, and the stop rod 34 is disposed in the non-interference position.

As shown in Fig. 5, when the main rotary member 21 (see fig. 4) is rotated from the ON position to the OFF position, the projecting block 221 of the rotating rod 22 pivots to engage the first positioning groove 336 in the spacer member 33. At this time, the push button 32 can be initially rotated to the second position (B), as shown in Fig. 5A, and then released so as to rotate to the third position (C), as shown in Fig. 6. Hence, the auxiliary rotary member 31 is rotated from the connection position to the disconnection position, and the notch wall 313 and the opening wall 312 of the auxiliary rotary member 31 respectively push and move the notch-engaging projection 333 and the opening-engaging projection 332 of the spacer member 33 so as to move the spacer member 33 from the non-separating position to the separating position. As such, the inclined surface 335 of the spacer member 33 is in contact with the inclined annular surface 233 of the driving rod 23, and the spacer member 33 is inserted between the rotating rod 22 and the driving rod 23. This removes the driving rod 23 rearwardly from the rotating rod 22, as shown in Fig. 7, and prevents movement and rotation of the driving rod 23 even when the main rotary member 21 is operated. Because the stop rod 35 is biased by the second resilient member 37 to the interference position, as shown in Fig. 6, further rotation of the push button 32 is prevented. As a result, while the motorcycle can be steered, the engine (not shown) of the motorcycle cannot be started.

With reference to Fig. 6, when it is desired to double-lock steering of the motorcycle, the main rotary member 21 is rotated from the OFF position to the LOCK position so as to engage the projecting block 221 with the second positioning groove 337 in the spacer member 33 and so as to move the locking bolt 24 to the locking position. Subsequently, the push button 32 is rotated from the first position (A) to the second position (B), and then released so that the spacer member 33 is moved to the separating position. In this state, the stop rod 35 is also disposed in the interference position, and therefore prevents rotation and movement of the driving rod 23. As such, rotation of the push button 32 is prevented, and rotation of the main rotary member 21 does not result in rotation and/or movement of the driving rod 23. Thus, the locking bolt 24 is locked in the locking position. In this state, even if fatigue failure of all of the first, second, and third resilient members 36, 37, 38 has occurs, since the driving rod 23 is spaced apart from the rotating rod 22, the locking bolt 4 is maintained in the locking position.

When it is desired to move the locking bolt 24 locked in the locking position, a remote controller (not shown) is operated so as to activate the solenoid valve 30. Hence, the stop rod 35 is moved from the interference position to the non-interference position. Subsequently, the push button 32 is rotated to the first position (A). This allows for rotation of the main rotary member 21 from the LOCK position to the ON position or the OFF position.

## Claims

1. A combination ignition switch and steering lock assembly for a motorcycle, the assembly including a lock seat (1) and a main locking unit (2), the main locking unit (2) including:
a driving rod (23) movable relative to the lock seat (1) between front and rear positions;
a main rotary member (21) operable to rotate on the lock seat (1) so as to move the driving rod (23) between the front and rear positions; and
a locking bolt (24) driven by the driving rod (23) to move relative to the lock seat (1) between a locking position whereat the driving rod (23) is disposed in the rear position and whereat steering of the motorcycle is prevented, and a release position whereat the driving rod (23) is disposed in the front position and whereat steering of the motorcycle is allowed;
**characterized by** an auxiliary locking unit (3) including:
an auxiliary rotary member (31) disposed rotatably on the lock seat (1) and operable to rotate on the lock seat (1) between a connection position whereat movement of the driving rod (23) relative to the lock seat (1) is allowed, and a disconnection position whereat movement of the driving rod (23) relative to the lock seat (1) is prevented, the auxiliary rotary member (31) being biased to the connection position;
a stop rod (35) movable on the lock seat (1) between an interference position whereat rotation of the auxiliary rotary member (31) relative to the lock seat (1) is prevented, and a non-interference position whereat rotation of the auxiliary rotary member (31) relative to the lock seat (1) is allowed, the stop rod (35) being biased to the interference position and having an inner end; and
a solenoid valve (30) connected to the stop rod (35) and remotely controllable to move the stop rod (35) to the non-interference position.

2. The combination ignition switch and steering lock assembly as claimed in Claim 1, further **characterized in that** the lock seat (1) includes a generally cylindrical front cap (11) having an annular wall formed with a slide slot (14) that extends along a circumferential direction of the front cap (11) and that has two closed ends, the auxiliary rotary member (31) being configured as an annular plate and having an outer periphery formed with a projecting plate portion (315) that extends radially and outwardly therefrom and through the slide slot (14) in the front cap (11) and that has a radial outer end, the auxiliary locking unit (3) further including a push button (32) that is sleeved fixedly on the radial outer end of the projecting plate portion (315) of the auxiliary rotary member (31) and that is disposed outwardly of the front cap (11).

3. The combination ignition switch and steering lock assembly as claimed in Claim 2, further **characterized in that**
the main rotary member (21) is disposed outwardly of the front cap (11);
the main locking unit (2) further includes a rotating rod (22) extending through the front cap (11) and having a front end connected fixedly to the main rotary member (21);
the driving rod (23) is disposed movably and rotatably within the lock seat (1) and has a front end (231) that is biased to abut against a rear end of the rotating rod (22);
the auxiliary rotary member (31) is sleeved rotatably on the rotating rod (22); and
the auxiliary locking unit (3) further includes a spacer member (33) movable in the lock seat (1) along a predetermined direction between a separating position whereat the spacer member (33) is inserted between the driving rod (23) and the rotating rod (22) so as to move the driving rod (23) rearwardly to separate from the rotating rod (22), and a non-separating position whereat the front end (231) of the driving rod (23) abuts against the rear end of the rotating rod (22), and a crank member (34) disposed pivotally in the lock seat (1) and having a rear crank arm (342) and a front crank arm (341) that is inserted into the spacer member (33) such that movement of the spacer member (33) results in rotation of the rear crank arm (342) of the crank member (34) along a curved path between a first arm position whereat the spacer member (33) is disposed in the non-separating position and whereat the inner end of the stop rod (35) is disposed out of the curved path of the rear crank arm (342) of the crank member (34) so as to allow for movement of the spacer member (33) from the non-separating position to the separating position and, thus, rotation of the auxiliary rotary member (31) from the connection position to the disconnection position, and a second arm position whereat the spacer member (33) is disposed in the separating position and whereat the inner end of the stop rod (35) is disposed in the curved path of the rear crank arm (342) of the crank member (34) so as to prevent movement of the spacer member (33) from the separating position to the non-separating position and, thus, rotation of the auxiliary rotary member (31) from the disconnection position to the connection position, wherein, when the driving rod (23) is disposed in the rear position and when the auxiliary rotary member (31) is disposed in the disconnection position, the solenoid valve (30) can be remotely controlled to move the stop rod (35) to the non-interference position so as to allow for rotation of the auxiliary rotary member (31) from the disconnection position to the connection position, after which the main rotary member (21) can be rotated to move the locking bolt (24) from the locking position to the release position.

4. The combination ignition switch and steering lock assembly as claimed in Claim 3, further **characterized**
**in that**
the auxiliary rotary member (31) has an opening (317) and a notch (314) that is formed in the outer periphery of the auxiliary rotary member (31), an opening wall (312) defining the opening (317), and a notch wall (313) defining the notch (314); and
the spacer member (33) includes a generally U-shaped spacer body (331) disposed around the rotating rod (22) and the driving rod (23) and movable to push said driving rod (23) rearwardly away from said rotating rod (22) so as to be disposed in a space between the rotating rod (22) and the driving rod (23), an opening-engaging projection (332) extending forwardly from one end of the spacer body (331) and movable within said opening (317) in said auxiliary rotary member (31), and a notch-engaging projection (333) extending forwardly from the other end of the spacer body (331) and movable within said notch (314) in said auxiliary rotary member (31), the spacer body (331) having a rear surface that is formed with a crank-engaging recess (334) for insertion of the front crank arm (341) of the crank member (34) thereinto, the opening (317) and the notch (314) being outlined such that, when the auxiliary rotary member (31) is rotated from the connection position to the disconnection position, the opening wall (312) and the notch wall (313) of the auxiliary rotary member (31) respectively push and move the opening-engaging projection (332) and the notch-engaging projection (333) of the spacer member (33) along the predetermined direction so as to move the spacer body (331) into the space between the rotating rod (22) and the driving rod (23), and when the auxiliary rotary member (31) is rotated from the disconnection position to the connection position, the opening wall (312) and the notch wall (313) of the auxiliary rotary member (31) respectively push and move the opening-engaging projection (332) and the notch-engaging projection (333) of the spacer member (33) along the predetermined direction so as to remove the spacer body (331) from the space between the rotating rod (22) and the driving rod (23) .

5. The combination ignition switch and steering lock assembly as claimed in Claim 4, further **characterized in that**
the driving rod (23) has an inner surface formed with a C-shaped projection (232) having two ends defining a gap (232') therebetween;
the rotating rod (22) has an annular outer surface formed with a projecting block (221) that extends radially and outwardly therefrom and that engages the gap (232') in the driving rod (23) so as to allow for synchronous rotation of the rotating rod (22) and the driving rod (23);
the driving rod (23) further has a forwardly and inwardly inclined annular surface (233) that is formed with a stop block (234); and
the spacer member (33) is formed with an inclined surface (335), the inclined surface (335) engaging the stop block (234) of the driving rod (23) so as to prevent insertion of the spacer member (33) into the space between the rotating rod (22) and the driving rod (23) when the spacer member (33) is disposed in the non-separating position, the inclined surface (335) engaging the inclined annular surface (233) of the driving rod (23) so as to allow for insertion of the spacer member (33) into the space between the rotating rod (22) and the driving rod (23) when the spacer member (33) is disposed in the separating position.

6. The combination ignition switch and steering lock assembly as claimed in Claim 1, further **characterized in that** the lock seat (1) further includes:
an axial tube (12) having a front end connected coaxially and fixedly to a rear end of the front cap (11), the driving rod (23) being disposed movably within the axial tube (12);
a rear seat member (13) connected fixedly to a rear end of the axial tube (12), the locking bolt (24) being disposed movably on the rear seat member (13); and
an inclined tube (17) having an end connected fixedly to the axial tube (12), the stop rod (35) being disposed movably within the inclined tube (17).

7. The combination ignition switch and steering lock assembly as claimed in Claim 6, further **characterized in that** the auxiliary locking unit (3) further includes:
a first resilient member (36) disposed between the front cap (11) and the auxiliary rotary member (31) so as to bias the auxiliary rotary member (31) toward the connection position;
a second resilient member (37) disposed between the stop rod (35) and the inclined tube (17) so as to bias the stop rod (35) toward the interference position; and
a third resilient member (38) disposed between the driving rod (23) and the rear seat member (13) so as to bias the driving rod (23) toward the rotating rod (22).

8. The combination ignition switch and steering lock assembly as claimed in Claim 7, further **characterized in that**
the spacer member (33) has an inner surface that is formed with two positioning grooves (336, 337); and
the projecting block (221) of the rotating rod (22) coming into one of the positioning grooves (336, 337) in the spacer member (33) when the auxiliary rotary member (31) is disposed in the connection position, and into the other one of the positioning grooves (336, 337) in the spacer member (33) when the auxiliary rotary member (31) is disposed in the disconnection position.

9. The combination ignition switch and steering lock assembly as claimed in Claim 8, further **characterized in that** the main locking unit (2) further includes a crankshaft (25) and a sliding member (26) that are connected to the driving rod (23) such that the crankshaft (25) can be driven by the driving rod (23) to move the sliding member (26) horizontally relative to the lock seat (1), horizontal movement of the sliding member (26) resulting in movement of the locking bolt (24) between the locking position and the release position.

## Patentansprüche

1. Eine kombinierte Zündschalter- und Lenkradschlossanordnung für ein Motorrad, wobei die Anordnung einen Verriegelungssitz (1) und eine Hauptverriegelungseinheit (2) aufweist, wobei die Hauptverriegelungseinheit (2) aufweist:
eine Antriebsstange (23), die relativ zu dem Verriegelungssitz (1) zwischen vorderen und hinteren Positionen bewegbar ist;
ein Hauptdrehelement (21), das betätigbar ist, um sich auf dem Verriegelungssitz (1) zu drehen, um die Antriebsstange (23) zwischen den vorderen und hinteren Position zu bewegen; und
einen Verriegelungsbolzen (24), welcher durch die Verriegelungsstange (23) angetrieben wird, um sich relativ zu dem Verriegelungssitz (1) zwischen einer Verriegelungsposition, an welcher die Antriebsstange (23) an der hinteren Position angeordnet ist und an welcher ein Lenken des Motorrads verhindert ist, und
einer Freigabeposition, an welcher die Antriebsstange (23) an der vorderen Position angeordnet ist und an welcher das Lenken des Motorrads gestattet ist, zu verschieben;
**gekennzeichnet durch** eine Hilfsverriegelungseinheit (3) mit:
einem Hilfsdrehelement (31), das drehbar auf dem Verriegelungssitz (1) angeordnet ist und so betätigbar ist, dass es sich auf dem Verriegelungssitz (1) zwischen einer Verbindungsposition, an welcher eine Bewegung der Antriebsstange (23) relativ zu dem Verriegelungssitz (1) gestattet ist, und einer nicht verbundenen Position, an welcher eine Bewegung der Antriebsstange (23) relativ zu dem Verriegelungssitz (1) verhindert ist, dreht, wobei das Hilfsdrehelement (31) zu der Verbindungsposition vorgespannt ist;
einer Stoppstange (35), die auf dem Verriegelungssitz (1) zwischen einer Eingriffsposition, an welcher eine Drehung des Hilfsdrehelementes (31) relativ zu dem Verriegelungssitz (1) verhindert ist, und einer Nichteingriffsposition, an welcher eine Drehung des Hilfsdrehelements (31) relativ zu dem Verriegelungssitz (1) gestattet ist, bewegbar ist, wobei die Stoppstange (35) zu der Eingriffsposition vorgespannt ist und ein inneres Ende aufweist; und
einem Elektromagnetventil (30), das mit der Stoppstange (35) verbunden und fernsteuerbar ist, um die Stoppstange (35) zu der Nichteingriffsposition zu bewegen.

2. Die kombinierte Zündschalter- und Lenkradschlossanordnung, wie sie in Anspruch 1 beansprucht wurde, außerdem **dadurch gekennzeichnet, dass** der Verriegelungssitz (1) eine im Wesentlichen zylindrisch geformte vordere Kappe (11) mit einer ringförmigen Wand, in welcher ein Gleitschlitz (14) ausgebildet ist, der sich entlang einer Umfangsrichtung der vorderen Kappe (11) erstreckt und der zwei geschlossene Enden hat, aufweist, wobei das Hilfsdrehelement (31) als eine ringförmige Platte gestaltet ist und einen Außenumfang mit einem vorstehenden Plattenabschnitt (315) aufweist, der sich von diesem radial und nach außen und durch den Gleitschlitz (14) in der vorderen Kappe (11) erstreckt und der ein radiales äußeres Ende aufweist, wobei die Hilfsverriegelungseinheit (3) außerdem einen Druckknopf (32) aufweist, der fest auf das radiale äußere Ende des vorstehenden Plattenabschnitts (315) des Hilfsdrehelementes (31) aufgeschoben ist und der außerhalb der vorderen Kappe (11) angeordnet ist.

3. Die kombinierte Zündschalter- und Lenkradschlossanordnung, wie sie in Anspruch 2 beansprucht wurde, außerdem **dadurch gekennzeichnet, dass**
das Hauptdrehelement (21) außerhalb der vorderen Kappe (11) angeordnet ist;
die Hauptverriegelungseinheit (2) außerdem eine Drehstange (22) aufweist, die sich durch die vordere Kappe (11) erstreckt und ein vorderes Ende aufweist, das fest mit dem Hauptdrehelement (21) verbunden ist;
die Antriebsstange (23) beweglich und drehbar innerhalb des Verriegelungssitzes (1) angeordnet ist und ein vorderes Ende (231) aufweist, das so vorgespannt ist, dass es an einem hinteren Ende der Drehstange (22) anliegt;
das Hilfsdrehelement (31) drehbar auf die Drehstange (22) aufgeschoben ist; und
die Hilfsverriegelungseinheit (3) umfasst außerdem ein Abstandselement (33), welches in dem Verriegelungssitz (1) entlang einer festgelegten Richtung zwischen einer Trennposition, an welcher das Abstandselement (33) zwischen der Antriebsstange (23) und der Drehstange (22) so eingesetzt ist, dass die Antriebsstange (23) nach hinten bewegt wird, um sich von der Drehstange (22) zu trennen, und einer Nichttrennposition, an welcher das vordere Ende der Antriebsstange (23) an dem hinteren Ende der Drehstange (22) anliegt, bewegbar ist, und ein Kurbelelement (34), das schwenkbar in dem Verriegelungssitz (1) angeordnet ist und einen hinteren Kurbelarm (342) und einen vorderen Kurbelarm (341) aufweist, welcher in das Abstandselement (33) so eingesetzt ist, dass die Bewegung des Abstandselements (33) zu einer Drehung des hinteren Kurbelarmes (342) des Kurbelelements (34) entlang eines gekrümmten Weges zwischen einer ersten Armposition, an welcher das Abstandselement (33) in der Nichttrennposition angeordnet ist und an welcher das (33) in der Nichttrennposition angeordnet ist und an welcher das innere Ende der Stoppstange (35) außerhalb des gekrümmten Weges des hinteren Kurbelarmes (342) des Kurbelelements (34) angeordnet ist, um eine Bewegung des Abstandselements (33) von der Nichttrennposition zu der Trennposition und **dadurch** eine Drehung des Hilfsdrehelements (31) von der Verbindungsposition zu der nicht verbundenen Position zu erlauben, und einer zweiten Armposition, an welcher das Abstandselement (33) in der Trennposition angeordnet ist und an welcher das innere Ende der Stoppstange (35) auf dem gekrümmten Weg des hinteren Kurbelarms (342) des Kurbelelementes (34) angeordnet ist, um eine Bewegung des Abstandselements (33) von der Trennposition zu der Nichttrennposition und damit eine Drehung des Hilfsdrehelements (31) von der nicht verbundenen Position zu der verbundenen Position zu verhindern, führt, wobei dann, wenn die Antriebsstange (23) an der hinteren Position angeordnet ist und wenn das Hilfsdrehmoment (31) in der nicht verbundenen Position angeordnet ist, das Elektromagnetventil (30) ferngesteuert werden kann, um die Stoppstange (35) zu der Nichteingriffsposition zu bewegen, um eine Drehung des Hilfsdrehelements (31) von der nicht verbundenen Position zu der Verbindungsposition zu erlauben, wonach das Hauptdrehelement (21) gedreht werden kann, um den Verriegelungsbolzen (24) von der Verriegelungsposition zu der Freigabeposition zu bewegen.

4. Die kombinierte Zündschalter- und Lenkradschlossanordnung, wie sie in Anspruch 3 beansprucht wurde, außerdem **dadurch gekennzeichnet, dass**
das Hilfsdrehelement (31) eine Öffnung (317) und eine Kerbe (314), die in dem Außenumfang des Hilfsdrehelements (31) ausgebildet ist, eine Öffnungswand (312), welche die Öffnung (317) definiert und eine Kerbwand (313), welche die Kerbe (314) definiert, aufweist; und
das Abstandselement (33) umfasst einen im Wesentlichen U-förmigen Abstandskörper (331), der um die Drehstange (22) und die Antriebsstange (23) angeordnet und bewegbar ist, um die Antriebsstange (23) nach hinten weg von der Drehstange (22) zu drücken, so dass er in einem Raum zwischen der Drehstange (22) und der Antriebsstange (23) angeordnet ist, einen Öffnungseingriffsvorsprung (332), der sich nach vorne von einem Ende des Abstandskörper (331) erstreckt und in der Öffnung (317) in dem Hilfsdrehelement (31) bewegbar ist, und einen Kerbeingriffsvorsprung (333), der sich nach vorne von dem anderen Ende des Abstandskörper (331) erstreckt und in der Kerbe (314) in dem Hilfsdrehelement (31) bewegbar ist, wobei der Abstandskörper (331) eine hintere Fläche aufweist, in welcher eine Kurbeleingriffsaussparung (334) zum Einsetzen des vorderen Kurbelarmes (341) des Kurbelelements (34) ausgebildet ist, wobei die Öffnung (317) und die Kerbe (314) so gestaltet sind, dass dann, wenn das Hilfsdrehelement (31) von der Verbindungsposition zu der nicht verbundenen Position gedreht wird, die Öffnungswand (312) und die Kerbwand (313) des Hilfsdrehelementes (31) jeweils den Öffnungseingriffsvorsprung (332) und den Kerbeingriffsvorsprung (333) des Abstandselements (33) entlang der vorbestimmten Richtung drücken und bewegen, um den Abstandskörper (331) in den Freiraum zwischen der Drehstange (22) und der Antriebsstange (23) zu bewegen, und dann, wenn das Hilfsdrehelement (31) von der nicht verbundenen Position zu der Verbindungsposition gedreht wird, die Öffnungswand (312) und die Kerbwand (313) des Hilfsdrehelements (31) den Öffnungseingriffsvorsprung (332) und den Kerbeingriffsvorsprung (333) des Abstandselements (33) jeweils entlang der festgelegten Richtung so drücken und bewegen, dass der Abstandskörper (331) aus dem Freiraum zwischen der Drehstange (22) und der Antriebsstange (23) entfernt wird.

5. Die kombinierte Zündschalter- und Lenkradschlossanordnung, wie sie in Anspruch 4 beansprucht wurde, außerdem **dadurch gekennzeichnet, dass**
die Antriebsstange (23) weist eine innere Oberfläche mit einem C-förmigen Vorsprung (232) auf, welcher zwei Enden hat, die dazwischen eine Lücke (232') definieren;
die Drehstange (22) hat eine ringförmige Außenfläche, an welcher ein vorstehender Block (221) ausgebildet ist, der sich radial und nach außen erstreckt und in die Lücke (232') in die der Antriebsstange (23) eingreift, um eine synchrone Drehung der Drehstange (22) und der Antriebsstange (23) zu gestatten;
die Antriebsstange (23) hat außerdem eine nach vorne und nach innen geneigte ringförmige Fläche (233), an welcher ein Stoppblock (234) ausgebildet ist; und
das Abstandselement (33) weist eine schräge Fläche (335) auf, wobei die schräge Fläche (335) an dem Stoppblock (234) der Antriebsstange (23) angreift, um ein Einsetzen des Abstandselements (33) in den Freiraum zwischen der Drehstange (22) und der Antriebsstange (23) zu verhindern, wenn das Abstandselement (33) in der Nichttrennposition angeordnet ist, wobei die schräge Fläche (335) an der schrägen ringförmigen Fläche (233) der Antriebsstange (23) angreift, um ein Einsetzen des Abstandselements (33) in den Freiraum zwischen der Drehstange (22) und der Antriebsstange (23) zu erlauben, wenn das Abstandselement (33) in der Trennposition angeordnet ist.

6. Die kombinierte Zündschalter- und Lenkradschlossanordnung, wie sie in Anspruch 1 beansprucht wurde, außerdem **dadurch gekennzeichnet, dass** der Verriegelungssitz (1) außerdem aufweist:
ein axiales Rohr (12), das ein vorderes Ende aufweist, welches koaxial und fest mit einem hinteren Ende der vorderen Kappe (11) verbunden ist, wobei die Antriebsstange (23) beweglich innerhalb des axialen Rohres (12) angeordnet ist;
ein hinteres Sitzelement (13), das fest mit einem hinteren Ende des axialen Rohres (12) verbunden ist, wobei der Verriegelungsbolzen (24) beweglich auf dem hinteren Sitzelement (13) angeordnet ist; und
ein schräges Rohr (17), das ein fest mit dem axialen Rohr (12) verbundenes Ende aufweist, wobei die Stoppstange (35) beweglich innerhalb des schrägen Rohres (17) angeordnet ist.

7. Die kombinierte Zündschalter- und Lenkradschlossanordnung, wie sie in Anspruch 6 beansprucht wird, außerdem **dadurch gekennzeichnet, dass** die Hilfsverriegelungseinheit (3) außerdem aufweist:
ein erstes federndes Element (36), das zwischen der vorderen Kappe (11) und dem Hilfsdrehelement (31) angeordnet ist, um das Hilfsdrehelement (31) zu der Verbindungsposition vorzuspannen;
ein zweites federndes Element (37), das zwischen der Stoppstange (35) und dem schrägen Rohr (17) angeordnet ist, um die Stoppstange (35) zu der Eingriffsposition vorzuspannen; und
ein drittes federndes Element (36), das zwischen der Antriebsstange (23) und dem hinteren Sitzelement (13) angeordnet ist, um die Antriebsstange (23) zu der Drehstange (22) vorzuspannen.

8. Die kombinierte Zündschalter- und Lenkradschlossanordnung, wie sie in Anspruch 7 beansprucht ist, außerdem **dadurch gekennzeichnet, dass**
das Abstandselement (33) eine Innenfläche aufweist, in welcher zwei Positionierungsnuten (336, 337) ausgebildet sind; und
der vorspringende Block (221) der Drehstange (22) in eine der Positionierungsnuten (336, 337) in dem Abstandselement (33) eintritt, wenn das Hilfsdrehelement (31) in der Verbindungsposition angeordnet ist, und in die andere Positionierungsnut (336, 337) in dem Abstandselement (33) eintritt, wenn das Hilfsdrehelement (31) in der nicht verbundenen Position angeordnet ist.

9. Die kombinierte Zündschalter- und Lenkradschlossanordnung, wie sie in Anspruch 8 beansprucht ist, außerdem **dadurch gekennzeichnet, dass** die Hauptverriegelungseinheit (2) außerdem eine Kurbelwelle (25) und ein Gleitelement (26) aufweist, die so mit der Antriebswelle (23) verbunden sind, dass die Kurbelwelle (25) durch die Antriebswelle (23) angetrieben werden kann, um das Gleitelement (26) horizontal relativ zu dem Verriegelungssitz (1) zu bewegen, wobei die horizontale Bewegung des Gleitelements (26) zu einer Bewegung des Verriegelungsbolzens (24) zwischen der Verriegelungsposition und der Freigabeposition führt.

## Revendications

1. Assemblage d'un commutateur d'allumage et d'un verrouillage de direction pour une motocyclette, l'assemblage incluant une douille de verrouillage (1) et un module de verrouillage principal (2), le module de verrouillage principal (2) comprenant :
une tige d'entraînement (23) mobile par rapport à la douille de verrouillage (1) entre des positions avant et arrière ;
un élément tournant principal (21) actionnable pour tourner sur la douille de verrouillage (1) de façon à déplacer la tige d'entraînement (23) entre les positions avant et arrière ; et
un plot de verrouillage (24) entraîné par la tige d'entraînement (23) pour se déplacer par rapport à la douille de verrouillage (1) entre une position de verrouillage à laquelle la tige d'entraînement (23) est disposée dans la position arrière et dans laquelle la direction de la motocyclette est verrouillée, et une position de libération dans laquelle la tige d'entraînement (23) est disposée dans la position avant et dans laquelle la direction de la motocyclette est libre ;
**caractérisé par** un élément de verrouillage auxiliaire (3)'comprenant :
un élément tournant auxiliaire (31) disposé de façon à pouvoir tourner sur la douille de verrouillage (1) et actionnable pour tourner sur la douille de verrouillage (1) entre une position de connexion dans laquelle un déplacement de la tige d'entraînement (23) par rapport à la douille de verrouillage (1) est autorisé et une position de déconnexion dans laquelle un déplacement de la tige d'entraînement (23) par rapport à la douille de verrouillage (1) est empêché, l'élément tournant auxiliaire (31) étant sollicité vers la position de connexion ;
une tige d'arrêt (35) mobile sur la douille de verrouillage (1) entre une position d'interférence dans laquelle la rotation de l'élément tournant auxiliaire (31) par rapport à la douille de verrouillage (1) est empêchée et une position de non-interférence dans laquelle la rotation de l'élément tournant auxiliaire (31) par rapport à la douille de verrouillage (1) est autorisée, la tige d'arrêt (35) étant sollicitée vers la position d'interférence et ayant une extrémité interne ; et
une électrovanne (30) reliée à la tige d'arrêt (35) et commandable à distance pour déplacer la tige d'arrêt (35) vers la position de non-interférence.

2. Assemblage d'un commutateur d'allumage et d'un verrouillage de direction selon la revendication 1, **caractérisé en outre en ce que** la douille de verrouillage (1) comprend un capuchon (11) de forme générale cylindrique ayant une paroi annulaire comportant une fente de glissement (14) qui s'étend selon la direction périphérique du capuchon (11) et qui a deux extrémités fermées, l'élément tournant auxiliaire (31) étant agencé sous forme d'une plaque annulaire et ayant une périphérie externe comportant une partie de plaque en saillie (315) qui s'étend radialement et vers l'extérieur et à travers la fente de glissement (14) dans le capuchon (11) et comporte une extrémité externe radiale, l'élément de verrouillage auxiliaire (3) comprenant en outre un bouton poussoir (32) qui est emmanché de façon fixe sur l'extrémité radiale externe de la partie de plaque en saillie (315) de l'élément tournant auxiliaire (31) et qui est disposé vers l'extérieur du capuchon (11).

3. Assemblage d'un commutateur d'allumage et d'un verrouillage de direction selon la revendication 2, **caractérisé en outre en ce que** :
l'élément tournant principal (21) est disposé vers l'extérieur du capuchon (11) ;
l'élément de verrouillage principal (2) comprend en outre une tige tournante (22) s'étendant à travers le capuchon (11) et ayant une extrémité avant connectée de façon fixe à l'élément tournant principal (21) ;
la tige d'entraînement (23) est disposée de façon mobile et tournante dans la douille de verrouillage (1) et à une extrémité avant (231) qui est sollicitée pour buter contre une extrémité arrière de la tige tournante (22) ;
l'élément tournant auxiliaire (31) est emmanché à rotation sur la tige tournante (22) ; et
l'élément de verrouillage auxiliaire (3) comprend en outre un élément d'espacement (33) mobile dans la douille de verrouillage (1) selon une direction prédéterminée entre une position de séparation à laquelle l'élément d'espacement (33) est inséré entre la tige d'entraînement (23) et la tige tournante (22) de façon à déplacer la tige d'entraînement (23) vers l'arrière pour la séparer de la tige tournante (22) et une position de non séparation à laquelle l'extrémité avant (231) de la tige d'entraînement (23) bute contre l'extrémité arrière de la tige tournante (22), et un élément de came (34) monté à pivotement dans la douille de verrouillage (1) et ayant un bras de came arrière (342) et un bras de came avant (341) qui est inséré dans l'élément d'espacement (33) de sorte qu'un déplacement de l'élément d'espacement (33) entraîne une rotation du bras de came arrière (342) de l'élément de came (34) selon un trajet courbe entre une première position de bras à laquelle l'élément d'espacement (33) est disposé à la position de non séparation et à laquelle l'extrémité interne de la tige d'arrêt (35) est disposée en dehors du trajet courbe du bras de came arrière (342) de l'élément de came (34) de façon à permettre un déplacement de l'élément d'espacement (33) de la position de non séparation à la position de séparation et, par suite, la rotation de l'élément tournant auxiliaire (31) de la position de connexion à la position de déconnexion, et une seconde position de bras dans laquelle l'élément d'espacement (33) est disposé à la position de séparation et dans laquelle l'extrémité interne de la tige d'arrêt (35) est disposée dans le trajet courbe du bras de came arrière (342) de l'élément de came (34) de façon à empêcher un mouvement de l'élément d'espacement (33) depuis la position de séparation vers la position de non séparation et, par suite, une rotation de l'élément tournant auxiliaire (31) de la position de déconnexion à la position de connexion, dans lequel, quand la tige d'entraînement (23) est disposée à la position arrière et quand l'élément tournant auxiliaire (31) est disposé dans la position de déconnexion, l'électrovanne (30) peut être télécommandée pour déplacer la tige d'arrêt (35) vers la position de non-interférence de façon à permettre la rotation de l'élément tournant auxiliaire (31) de la position de déconnexion à la position de connexion, après quoi l'élément tournant principal (21) peut être tourné pour déplacer le plot de verrouillage (24) de la position de verrouillage à la position de libération.

4. Assemblage d'un commutateur d'allumage et d'un verrouillage de direction selon la revendication 3, **caractérisé en outre en ce que** :
l'élément tournant auxiliaire (31) comporte une ouverture (317) et une encoche (314) qui est formée à la périphérie externe de l'élément tournant auxiliaire (31), une paroi d'ouverture (312) définissant l'ouverture (317) et une paroi d'encoche (313) définissant l'encoche (314) ; et
l'élément d'espacement (33) comprend un élément d'espacement (331) en forme générale de U disposé autour de la tige tournante (22) et de la tige d'entraînement (23) et déplaçable pour pousser la tige d'entraînement (23) vers l'arrière à l'écart de la tige tournante (22) de façon à être disposé dans un espace entre la tige tournante (22) et la tige d'entraînement (23), une saillie d'engagement d'ouverture (332) s'étendant vers l'avant à partir d'une extrémité du corps d'espacement (331) et mobile dans l'ouverture (317) dans l'élément tournant auxiliaire (31) et une saillie d'engagement d'encoche (333) s'étendant vers l'avant à partir de l'autre extrémité du corps d'espacement (331) et mobile dans l'encoche (314) dans l'élément tournant auxiliaire (31), le corps d'espacement (331) ayant une surface arrière qui comporte un évidement d'engagement de came (334) pour insertion du bras de came avant (341) de l'élément de came (34), l'ouverture (317) et l'encoche (314) étant conformées de sorte que, quand l'élément tournant auxiliaire (31) est tourné de la position de connexion à la position de déconnexion, la paroi d'ouverture (312) et la paroi d'encoche (313) de l'élément tournant auxiliaire (31) poussent et déplacent respectivement la saillie d'engagement d'ouverture (332) et la saillie d'engagement d'encoche (333) de l'élément d'espacement (33) selon la direction prédéterminée de façon à déplacer le corps d'espacement (331) dans l'espace compris entre la tige tournante (22) et la tige d'entraînement (23), et, quand l'élément tournant auxiliaire (31) est tourné de la position de déconnexion à la position de connexion, la paroi d'ouverture (312) et la paroi d'encoche (313) de l'élément tournant auxiliaire (31) poussent et déplacent respectivement la saillie d'engagement d'ouverture (332) et la saillie d'engagement d'encoche (333) de l'élément d'espacement (33) selon la direction prédéterminée de façon à enlever le corps d'espacement (331) de l'espace compris entre la tige tournante (22) et la tige d'entraînement (23).

5. Assemblage d'un commutateur d'allumage et d'un verrouillage de direction selon la revendication 4, **caractérisé en outre en ce que** :
la tige d'entraînement (23) a une surface interne comportant une saillie en forme de C (232) ayant deux extrémités définissant un intervalle (232') entre elles,
la tige tournante (22) a une surface externe annulaire comportant un bloc en saillie (221) qui s'étend radialement et vers l'extérieur et qui entre en contact avec l'intervalle (232') dans la tige d'entraînement (23) de façon à permettre une rotation synchrone de la tige tournante (22) et de la tige d'entraînement (23) ;
la tige d'entraînement (23) a en outre une surface annulaire (233) inclinée vers l'avant et vers l'intérieur qui comporte un bloc d'arrêt (234) ; et
l'élément d'espacement (33) comporte une surface inclinée (335), la surface inclinée (335) entrant en contact avec le bloc d'arrêt (234) de la tige d'entraînement (23) de façon à empêcher une insertion de l'élément d'espacement (33) dans l'espace compris entre la tige tournante (22) et la tige d'entraînement (23) quand l'élément d'espacement (33) est disposé dans la position de non séparation, la surface inclinée (335) entrant en contact avec la surface annulaire inclinée (233) de la tige d'entraînement (23) de façon à permettre l'insertion de l'élément d'espacement (33) dans l'espace compris entre la tige tournante (22) et la tige d'entraînement (23) quand l'élément d'espacement (33) est disposé à la position de séparation.

6. Assemblage d'un commutateur d'allumage et d'un verrouillage de direction selon la revendication 1, **caractérisé en outre en ce que** la douille de verrouillage (1) comprend en outre :
un tube axial (12) ayant une extrémité avant connectée co-axialement et de façon fixe à l'extrémité arrière du capuchon (11), la tige d'entraînement (23) étant disposée de façon mobile dans le tube axial (12) ;
un élément de siège arrière (13) connecté de façon fixe à une extrémité arrière du tube axial (12), le plot de verrouillage (24) étant disposé de façon mobile sur l'élément de siège arrière (13) ; et
un tube incliné (17) ayant une extrémité connectée de façon fixe au tube axial (12), la tige d'arrêt (35) étant disposée de façon mobile dans le tube incliné (17).

7. Assemblage d'un commutateur d'allumage et d'un verrouillage de direction selon la revendication 6, **caractérisé en outre en ce que** l'élément de verrouillage auxiliaire (3) comprend en outre :
un premier élément élastique (36) disposé entre le capuchon (11) et l'élément tournant auxiliaire (31) de façon à solliciter l'élément tournant auxiliaire (31) vers la position de connexion ;
un second élément élastique (37) disposé entre la tige d'arrêt (35) et le tube incliné (17) de façon à solliciter la tige d'arrêt (35) vers la position d'interférence ; et
un troisième élément élastique (38) disposé entre la tige d'entraînement (23) et l'élément de siège arrière (13) de façon à solliciter la tige d'entraînement (23) vers la tige tournante (22).

8. Assemblage d'un commutateur d'allumage et d'un verrouillage de direction selon la revendication 7, **caractérisé en outre en ce que** :
l'élément d'espacement (33) a une surface interne qui comporte deux rainures de positionnement (336, 337) ; et
le bloc en saillie (221) de la tige tournante (22) venant dans l'une des rainures de positionnement (336, 337) dans l'élément d'espacement (33) quand l'élément tournant auxiliaire (31) est disposé à la position de connexion et dans l'autre des rainures de positionnement (336, 337) dans l'élément d'espacement (33) quand l'élément tournant auxiliaire (31) est disposé à la position de déconnexion.

9. Assemblage d'un commutateur d'allumage et d'un verrouillage de direction selon la revendication 8, **caractérisé en outre en ce que** l'élément de verrouillage principal (2) comporte en outre une came (25) et un élément coulissant (26) qui sont reliés à la tige d'entraînement (23) de sorte que la came (25) peut être entraînée par la tige d'entraînement (23) pour déplacer l'élément coulissant (26) horizontalement par rapport à la douille de verrouillage (1), le mouvement horizontal de l'élément coulissant (26) résultant en un mouvement du plot de verrouillage (24) entre la position de verrouillage et la position de libération.
